# EUROPEAN PATENT SPECIFICATION

(11) **EP 0 619 326 B1**
(45) Date of publication and mention of the grant of the patent: **25.06.1997**
(21) Application number: 94302518.9
(22) Date of filing: 11.04.1994
(51) Int. Cl.: C08F 4/605, C08F 4/615, C08F 10/00

(54) **Olefin polymerization catalyst and olefin polymerisation process**
Katalysator und Verfahren zur Olefin-Polymerisation
Catalyseur et procédé pour la polymérisation d'oléfines

(30) Priority: 09.04.1993 JP 83416/93; 22.10.1993 JP 264821/93
(43) Date of publication of application: 12.10.1994
(73) Proprietor: TOSOH CORPORATION, Yamaguchi-ken 746 (JP)
(72) Inventor: Takahashi, Fumiharu, Yokkaichi-shi, Mei-ken (JP); Yano, Akihiro, Yokkaichi-shi, Mei-ken (JP)
(74) Representative: Kearney, Kevin David Nicholas

(56) References cited:
- EP-A- 0 436 399
- EP-A- 0 500 944

## Description

### Background of the Invention:

### Field of the Invention:

The present invention relates to an olefin polymerization catalyst which is constituted of a prepolymerized catalyst formed by prepolymerizing an olefin, an ionizing ionic compound, and an organoaluminum compound, or the catalyst further containing a Lewis base compound. The present invention also relates to an olefin polymerization process employing the above catalyst. More specifically, the present invention is characterized in that a prepolymerized catalyst obtained by prepolymerization of olefin with a small amount (compared to the prior art) of an organoaluminumoxy compound and a metallocene compound is activated with an organoaluminum compound and an ionizing ionic compound, which is capable of causing other compounds to ionize.

### Description of the Related Art:

In production of polyolefins, catalysts are known which are constituted of a combination of a transition metal compound and an organometallic compound. Kaminsky, et al. disclosed that a catalyst formed from a metallocene and methylaluminoxane has high activity in polymerization of olefin including propylene (Japanese Patent Application Laid-open No. 58-19309).

The catalyst systems employed in the above patent publications, although they have excellent activity for polymerization, are used in most cases in solution polymerization owing to the solubility thereof in the reaction systems. In addition to the limitation of the polymerization process, the relatively expensive aluminoxane have to be used in a large quantity to produce a polymer having industrially useful properties, which involve the disadvantages of high production cost and excessive aluminum residue in the resulting polymer.

On the other hand, Japanese Patent Application Laid-Open No. 60-35006 discloses catalyst systems which comprise the aforementioned soluble catalyst system supported on an inorganic oxide carrier like silica, and Japanese Patent Laid-Open No. 63-152608 discloses a catalyst system comprising an olefin-prepolymerized component to improve properties of the resulting polymer particles formed by gas-phase polymerization. Such catalysts, however, do not have sufficient polymerization activity per unit weight of methylaluminoxane.

To improve the activity per unit weight of methylaluminoxane, Japanese Patent Application Laid-Open Nos. 4-8704, 4-11604, and 4-213305, for example, disclose a catalyst system containing less methylaluminoxane and modified by prepolymerization for gas phase polymerization which gives a polymer having satisfactory particle properties with high polymerization catalytic activity. However, the catalyst activity was not sufficient yet although the amount of methylaluminoxane is reduced.

The inventors of the present invention made comprehensive studies to solve the above problems, and found that the use of catalyst system comprising a component modified by prepolymerization of olefin, an organoaluminum compound, and an ionizing ionic compound, or the catalyst system further comprising a Lewis compound added thereto enables production of polyolefin having excellent properties and processability with high catalyst activity and high efficiency. The present invention has been accomplished based on the above findings.

### Summary of the Invention:

An object of the present invention is to provide a polymerization catalyst comprising a less amount of organoaluminumoxy compound in gas phase polymerization or suspension polymerization and having excellent polymerization activity.

According to an aspect of the present invention, there is provided an olefin polymerization catalyst system comprising an olefin-prepolymerized catalyst prepared by prepolymerizing an olefin on a catalyst component constituted of (a) a carrier, (c) an organoaluminumoxy compound, and (d) a metallocene compound; (e) an organoaluminum compound, and (f) an ionizing ionic compound.

According to another aspect of the present invention, there is provided an olefin polymerization catalyst comprising an olefin-prepolymerized catalyst prepared by prepolymerizing an olefin on a catalyst constituted of (a) a carrier, (c) an organoaluminumoxy compound, and (d) a metallocene compound; (e) an organoaluminum compound, and (f) an ionizing ionic compound.

According to still another aspect of the present invention, there is provided an olefin polymerization catalyst comprising the above catalyst components and additionally (g) a Lewis base compound.

According to a further aspect of the present invention there is provided a polyolefin production process which polymerizes an olefin or copolymerizes olefins in the presence of the above catalyst.

### Detailed Description of the Preferred Embodiment

The olefin polymerization catalyst of the present invention is described first.

The carrier (a) used in the present invention is an inorganic solid compound or an organic solid compound. The inorganic solid compound is preferably a fine particulate porous matter having an average particle diameter preferably in the range of from 1 to 300 µm (micrometers), more preferably from 10 to 20 µm. The specific examples thereof include oxides of elements such as silicon, aluminum or magnesium for example silica, alumina, and magnesia; oxides of transition metal elements such as titanium or zirconium such as titania, and zirconia; halides such as chlorides for example magnesium chloride; and mixtures of oxides such a silica-alumina, and silica-magnesia. Such inorganic solid compounds usually contain an alkali metal salt or an alkaline earth metal salt such as sodium, potassium, barium or magnesium for example an oxide such as Na₂O, a carbonate such as K₂CO₃, a sulphate such as BaSO₄ or a nitrate such as Mg(NO₃)₂. The above fine particulate inorganic solid compound is preferably treated for elimination of impurity before use, although such treatment is not essential. The inorganic solid compound in a fine particle form, which has properties depending on the kind of compound and the process of preparation thereof, preferably has a specific surface area in the range of from 10 to 1000 m²/g, more preferably from 50 to 800 m²/g, and a pore volume in the range of from 0.1 to 3 cc/g (1 cc/g = 1 cm³/g) as measured by the BET method (general method) in a nitrogen atmosphere. The inorganic solid compound is calcined, if necessary, at a temperature of from 100 to 1000°c, preferably from 200 to 900°C under a reduced pressure or under an inert gas stream. The aforementioned organic solid compound is preferably a finely divided particulate material having an average particle diameter of from 1 to 300 µm. Specifically, the organic solid compound may include polymers and copolymers composed of a polymer of α-olefin such as ethylene and propylene, and polymers and copolymers composed a polymer of styrene.

The organoaluminum compound (b) employed in the present invention may be represented by the general formula (1) below:

Al(R₁)³ (1)

wherein each R¹ group independently represents a hydrogen atom or a halogen atom, an amino group, an alkyl group preferably a C₁-C₈ alkyl group, an alkoxy group preferably a C₁-C₈ alkoxy group, or an aryl group and at least one R¹ group represents an alkyl group.

Specific examples of the organoaluminum compound include trimethylaluminum, triethylaluminum, tri (n-propyl)aluminum, triisopropylaluminum, tri(n-butyl)aluminium, triisobutylaluminum, tri(t-butyl)aluminum, triamylaluminum, dimethylaluminum chloride, diethylaluminum chloride, diisobutylaluminum chloride, di(t-butyl)aluminum chloride, diamylaluminum chloride, methylaluminum dichloride, ethylaluminum dichloride, isobutylaluminum dichloride, t-butylaluminum dichloride, and amylaluminum dichloride, but the organoaluminum compound is not limited only to these specific examples.

The aforementioned organoaluminumoxy compound (c) employed in the present invention may be a known aluminoxane or a product of the reaction of an aluminoxane with water, and may be a mixture of two or more thereof. The substituent bonded to the aluminum of the aluminoxane is preferably an alkyl group of 1 to 6 carbons including methyl, ethyl, propyl, and butyl; preferably a methyl group. The oligomerization degree of the aluminoxane is normally in the range of from 4 to 60. Thus in the repeat unit 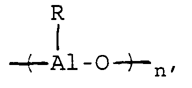 n = 4 to 60. Such compounds can be prepared by any appropriate e.g. known method: for example, addition of an aluminum compound to a suspension of a salt containing water of crystallization (e.g., copper sulfate hydrate, aluminum sulfate hydrate, magnesium chloride hydrate or nickel sulfate hydrate) in a hydrocarbon medium to cause reaction.

The metallocene compound (d) employed in the present invention may be represented by the general formula (2) or (3): 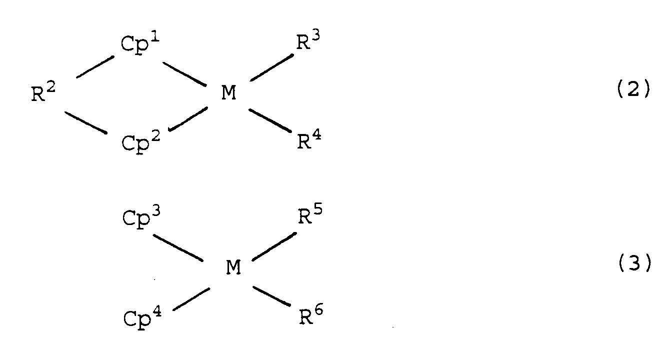 wherein Cp¹, Cp², Cp³ and Cp⁴ each independently represent a substituted or unsubstituted cyclopentadienyl, indenyl, or fluorenyl group; R² represents an alkylene group preferably a C₁-C₆ group, a dialkylsilanediyl group in which the alkyl group is preferably a C₁-C₆ group, dialkylgermanediyl group in which the alkyl group is preferably a C₁-C₆ group, an alkylphosphinediyl group in which the alkyl group is preferably a C₁-C₆ group, or an alkylimino group in which the alkyl group is preferably a C₁-C₆ group, which may be substituted and the R² linking the Cp¹ and Cp² groups together; M is a transition metal of Group IVB of Periodic Table; and R³, R⁴, R⁵ and R⁶ each independently represent a hydrogen atom, a halogen atom, or a hydrocarbon, alkoxy, or aryloxy group having 1 to 12 carbons.

In formula (2) R² may be replaced by 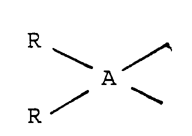 in which A represents an alkylene group, a silanediyl group, a germanediyl group, a phosphinediyl group or an amino group, and R represents an alkyl group, a cycloalkyl group, an aryl group, and an aralkyl group.

In the above general formulas, the halogen atom includes fluorine, chlorine, bromine and iodine. The hydrocarbon group of 1 to 12 carbons includes alkyl groups, cycloalkyl groups, aryl groups and aralkyl groups. Specifically the alkyl groups include methyl, ethyl, propyl, isopropyl and butyl. The cycloalkyl groups include cyclohexyl. The aryl groups include phenyl and tolyl. The aralkyl groups include benzyl and neophyl (C₆H₅C(CH₃)₂CH₂-) The alkoxy groups include methoxy and ethoxy. The aryloxy groups include phenoxy group.

Specific Examples of the metallocene compounds include
bis(cyclopentadienyl)dimethylzirconium,
bis(methylcyclopentadienyl)dimethylzirconium,
bis(butylcyclopentadienyl)dimethylzirconium,
ethylenebis(indenyl)dimethylzirconium,
isopropylidene(cyclopentadienyl-1-fluorenyl)dimethylzirconium,
diphenylmethylene(cyclopentadienyl-1-fluorenyl)dimethylzirconium,
dimethylsilanediylbis(2,4,5-trimethylcyclopentadienyl)zirconiumdimethyl,
dimethylsilanediylbis (2,4-dimethylcyclopentadienyl)zirconiumdimethyl,
dimethylsilanediylbis(3-methylcyclopentadienyl)zirconium-dichloride, bis(cyclopentadienyl)zirconium dichloride,
bis(methylcyclopentadienyl)zirconium dichloride,
bis(butylcyclopentadienyl)zirconium dichloride,
ethylenebis(indenyl)zirconium dichloride,
isopropylidene(cyclopentadienyl-1-fluorenyl)zirconium dichloride,
diphenylmethane(cyclopentadienyl-1-fluorenyl)zirconium dichloride, dimethylsilanediylbis(2,4,5-trimethylcyclopentadienyl)zirconium dichloride,
dimethylsilanediylbis(2,4-dimethylcyclopentadienyl)zirconium dichloride,
dimethylsilanediylbis(3-methylcyclopentadienyl)zirconium dichloride, bis(cyclopentadienyl)diphenylzirconium,
bis(methylcyclopentadienyl)diphenylzirconium,
bis(butylcyclopentadienyl)diphenylzirconium,
ethylenebis(indenyl)diphenylzirconium,
isopropylidene(cyclopentadienyl-1-fluorenyl)diphenylzirconium,
diphenylmethane(cyclopentadienyl-1-fluorenyl)diphneylzirconium, dimethylsilanediylbis(2,4,5-trimethylcyclopentadienyl)diphenylzirconium,
dimethylsilanediylbis(2,4-dimethylcyclopentadienyl)diphenylzirconium,
dimethylsilanediylbis(3-methylcyclopentadienyl)diphenylzirconium,
bis(cyclopentadienyl)diphenylzirconium,
bis(methylcyclopentadienyl)dibenzylzirconium,
bis(butylcyclopentadienyl)dibenzylzirconium,
ethylenebis(indenyl)dibenzylzirconium,
isopropylidene(cyclopentadienyl-1-fluorenyl)dibenzylzirconium,
diphenylmethane(cyclopentadienyl-1-fluorenyl)dibenzylzirconium,dimethylsilanediylbis(2,4,5-trimethylcyclopentadienyl)dibenzylzirconium,
dimethylsilanediylbis(2,4-dimethylcyclopentadienyl)dibenzylzirconium,
dimethylsilanediylbis(3-methylcyclopentadienyl)dibenzylzirconium,
bis(cyclopentadienyl)methoxyzirconium monochloride,
bis(methylcyclopentadienyl)methoxyzirconium monochloride,
bis(butylcyclopentadienyl)methoxyzirconium monochloride,
ethylenebis(indenyl)methoxyzirconium monochloride,
isopropylidene(cyclopentadienyl-1-fluorenyl)methoxyzirconium monochloride,
diphenylmethane(cyclopentadienyl-1-fluorenyl)methoxyzirconium monochloride, dimethylsilanediylbis(2,4,5-trimethylcyclopentadienyl)methoxyzirconium monochloride,
dimethylsilanediylbis(2,4-dimethylcyclopentadienyl)methoxyzirconium monochloride,
dimethylsilanediylbis(3-methylcyclopentadienyl)methoxyzirconium monochloride,
bis(cyclopentadienyl)methylzirconium monochloride,
bis(methylcyclopentadienyl)methylzirconium monochloride,
bis(butylcyclopentadienyl)methylzirconium monochloride,
ethylenebis(indenyl)methylzirconium monochloride,
isopropylidene(cyclopentadienyl-1-fluorenyl)methylzirconium monochloride,
diphenylmethane(cyclopentadienyl-1-fluorenyl)methylzirconium monochloride,
dimethylsilanediylbis(2,4,5-trimethylcyclopentadienyl)methylzirconium monochloride,
dimethylsilanediylbis(2,4-dimethylcyclopentadienyl)methylzirconium monochloride,
and dimethylsilanediylbis(3-methylcyclopentadienyl)methylzirconium monochloride;
and metallocene compounds which are derived by replacing zirconium in the above compounds with titanium or hafnium.
R² is preferably CH₂-CH₂ or dimethylsilyl;
R³ is preferably CH₃, Cl, phenyl or benzyl;
R⁴ is preferably the same as R³ or may be methoxy or methyl; Cp³ is preferably cyclopentadienyl, or methyl-, or butyl-, or 2,4,5-trimethyl-, or 2,4-dimethyl-, or 3-methylcyclopentadienyl or indenyl, or isopropylidene or diphenylmethane; Cp⁴ is preferably the same as Cp³ or may be cyclopentadienyl-1-fluorenyl.

The olefin-prepolymerized catalyst of the present invention is formed by prepolymerizing an olefin in the presence of the catalyst formed from the components (a), (b), (c) and (d), or otherwise the catalyst formed from the components (a), (c) and (d).

In the prepolymerization, ethylene or an α-olefin having 3 or more carbons is polymerized in an amount of normally from 0.01 to 100 g, preferably from 0.1 to 50 g per gram of the catalyst formed from the catalyst components (a), (b), (c) and (d), or the catalyst components (a), (c) and (d).

The conditions of contact of the monomer with the catalyst are not specially limited in the prepolymerization. The monomer is brought into contact with the catalyst in the absence of a solvent or in an inert solvent, generally at a temperature in the range of from -50 to 100°C, preferably from 20 to 60°C, more preferably from 0 to 50°C at an ordinary pressure such as atmospheric pressure or under pressure such as superatmospheric pressure. It is desirable to bring the catalyst into sufficient preferably intimate contact with the olefin in a fluidized state e.g. in the gas phase, or with stirring in the liquid phase. The prepolymerization may be conducted with one monomer or two or more monomers. In the case where two or more monomers are used, the monomers may be polymerized sequentially, or simultaneously.

In the prepolymerization, the organoaluminum compound (b) is preferably used in an amount of from 0.05 to 50 mmol, preferably from 0.5 to 10 mmol, in terms of the aluminum atom per gram of the carrier (a). The metallocene compound (d) is preferably used in an amount of from 0.005 to 1 mmol, preferably from 0.05 to 0.5 mmol, in terms of the transition metal atom per gram of the carrier (a). The organoaluminumoxy compound (c) is preferably used in an amount of from 1 to 200 mol, preferably from 5 to 100 mol in terms of the aluminum atom per mol of the transition metal atom of the metallocene compound (d).

The catalyst of the present invention may be formed by reaction of the above prepolymeric catalyst with a second organoaluminum compound (e) and an ionizing ionic compound (f).

The second organoaluminum compound (e) may be selected from the same list as given above for the first organoaluminum compound (b) used in the prepolymerized catalyst preparation, and may be the same or different from the first organoaluminum compound.

The ionizing ionic compound (f) which is used as the catalyst component may be represented by the general formula below:

(C⁺) (A⁻)

where (C⁺) is a cation which may be inorganic for example an alkali metal or alkaline earth metal or an organic cation, and (A⁻) is an anion.

The cation (C⁺) preferably includes specifically organic cations such as ones having an active proton, such as Brønsted acids, for example trimethylammonium, triethylammonium, tripropylammonium, tributylammonium, N,N-dimethylanilinium, N,N-diethylanilinium, N,N,2,4,5-pentamethylanilinium, triphenylphosphonium, tri(o-tolyl)phosphonium, tri(p-tolyl)phosphonium, tri(mesityl)phosphonium; as well as organic cations which do not have an active proton such as carboniums, oxoniums and sulfoniums, more specifically triphenylcarbenium (⁺C(C₆H₅)₃), tropyliums (⁺C₇H₇), etc., but are not limited thereto.

The anion (A⁻) is not specially limited, and is preferably a bulky non-coordinated anion as exemplified by (AℓR₄⁻), (BR₄⁻), (PR₆⁻) and (C10₄⁻).

Examples of the PR₆⁻ anion include hexafluorophosphates such as tri(n-butyl) ammonium hexafluorophosphate, N,N-dimethylanilinium hexafluorophosphate, sodium hexafluorophosphate, and bis(cyclopentadienyl)ferrocenium hexafluorophosphate.

Some examples of halates includes perchlorates such as tri(n-butyl)ammonium perchlorate, N,N-dimethylanilinium perchlorate, sodium perchlorate, and bis(cyclopentadienyl)ferrocenium perchlorate.

Specific examples of the ionizing ionic compound include the following compounds.
tri(n-butyl)ammonium tetrakis(p-tolyl)borate,
tri(n-butyl)ammonium tetrakis(m-tolyl)borate,
tri(n-butyl)ammonium tetrakis(2,4-dimethylphenyl)borate,
tri(n-butyl)ammonium tetrakis(3,5-dimethylphenyl)borate,
tri(n-butyl)ammonium tetrakis(pentafluorophenyl)borate,
N,N-dimethylanilinium tetrakis(p-tolyl)borate,
N,N-dimethylanilinium tetrakis(m-tolyl)borate,
N,N-dimethylanilinium tetrakis(2,4-dimethylphenyl)borate,
N,N-dimethylanilinium tetrakis(3,5-dimethylphenyl)borate,
N,N-dimethylanilinium tetrakis(pentafluorophenyl)borate,
triphenylcarbenium tetrakis(p-tolyl)borate,
triphenylcarbenium tetrakis(m-tolyl)borate,
triphenylcarbenium tetrakis(2,4-dimethylphenyl)borate,
triphenylcarbenium tetrakis(3,5-dimethylphenyl)borate,
triphenylcarbenium tetrakis(pentafluorophenyl)borate,
tropylium tetrakis(p-tolyl)borate,
tropylium tetrakis(m-tolyl)borate,
tropylium tetrakis(2,4-dimethylphenyl)borate,
tropylium tetrakis(3,5-dimethylphenyl)borate,
tropylium tetrakis(pentafluorophenyl)borate,
lithium tetrakis(pentafluorophenyl)borate,
lithium tetrakis(phenyl)borate,
lithium tetrakis(p-tolyl)borate,
lithium tetrakis(m-tolyl)borate,
lithium tetrakis(2,4-dimethylphenyl)borate,
lithium tetrakis(3,5-dimethylphenyl)borate,
lithium tetrafluoroborate,
sodium tetrakis(pentafluorophenyl)borate,
sodium tetrakis(phenyl)borate,
sodium tetrakis(p-tolyl)borate,
sodium tetrakis(m-tolyl)borate,
sodium tetrakis(2,4-dimethylphenyl)borate,
sodium tetrakis(3,5-dimethylphenyl)borate,
sodium tetrafluoroborate,
potassium tetrakis(pentafluorophenyl)borate,
potassium tetrakis(phenyl)borate,
potassium tetrakis(p-tolyl)borate,
potassium tetrakis(m-tolyl)borate,
potassium tetrakis(2,4-dimethylphenyl)borate,
potassium tetrakis(3,5-dimethylphenyl)borate, and
potassium tetrafluoroborate,
tri(n-butyl)ammonium tetrakis(p-tolyl)aluminate,
tri(n-butyl)ammonium tetrakis(m-tolyl)aluminate,
tri(n-butyl)ammonium tetrakis(2,4-dimethylphenyl)aluminate,
tri(n-butyl]ammonium tetrakis(3,5-dimethylphenyl)aluminate,
tri(n-butyl)ammonium
tetrakis(pentafluorophenyl)aluminate,
N,N-dimethylanilinium tetrakis(p-tolyl)aluminate,
N,N-dimethylanilinium tetrakis(m-tolyl)aluminate,
N,N-dimethylanilinium tetrakis(2,4-dimethylphenyl)aluminate,
N,N-dimethylanilinium tetrakis(3,5-dimethylphenyl)aluminate,
N,N-dimethylanilinium
tetrakis(pentafluorophenyl)aluminate,
triphenylcarbenium tetrakis(p-tolyl)aluminate,
triphenylcarbenium tetrakis(m-tolyl)aluminate,
triphenylcarbenium tetrakis(2,4-dimethylphenyl)aluminate,
triphenylcarbenium tetrakis(3,5-dimethylphenyl)aluminate,
triphenylcarbenium tetrakis(pentafluorophenyl)aluminate,
tropylium tetrakis(p-tolyl)aluminate,
tropylium tetrakis(m-tolyl)aluminate,
tropylium tetrakis(2,4-dimethylphenyl)aluminate,
tropylium tetrakis(3,5-dimethylphenyl)aluminate,
tropylium tetrakis(pentafluorophenyl)aluminate,
lithium tetrakis(phenyl)aluminate,
lithium tetrakis(p-tolyl)aluminate,
lithium tetrakis(m-tolyl)aluminate,
lithium tetrakis(2,4-dimethylphenyl)aluminate,
lithium tetrakis(3,5-dimethylphenyl)aluminate,
lithium tetrafluoroaluminate,
sodium tetrakis(pentafluorophenyl)aluminate,
sodium tetrakis(phenyl)aluminate,
sodium tetrakis(p-tolyl)aluminate,
sodium tetrakis(m-tolyl)aluminate,
sodium tetrakis(2,4-dimethylphenyl)aluminate,
sodium tetrakis(3,5-dimethylphenyl)aluminate,
sodium tetrafluoroaluminate,
potassium tetrakis(pentafluorophenyl)aluminate,
potassium tetrakis(phenyl)aluminate,
potassium tetrakis(p-tolyl)aluminate,
potassium tetrakis(m-tolyl)aluminate,
potassium tetrakis(2,4-dimethylphenyl)aluminate,
potassium tetrakis(3,5-dimethylphenyl)aluminate, and
potassium tetrafluoroaluminate; and the like, but is not limited thereto.

The molar ratio of the metallocene compound (d) to the ionizing ionic compound (f) in the present invention is not critical, and the molar ratio of (d) to (f) is preferably in the range of from 1 : 0.01 to 1 : 1000, more preferably from 1 : 0.2 to 1 : 200. The quantity of the organoaluminum compound is not critical.

In the preparation of the prepolymerized catalyst component of the present invention, the organoaluminumoxy compound (c) may be preliminarily supported on the carrier (a), or the metallocene compound (d) may be further supported thereon. When two or more components are supported on the carrier, the respective components may be successively supported, or otherwise simultaneously supported. The method of the support is not critical. Usually, the support is conducted by immersion in a solvent. The solvent may be an organic solvent such as a hydrocarbon solvent eg toluene, or hexane, or halogen-containing solvent such as methylene chloride.

In the catalyst system according to the present invention, when the Lewis base compound is added it is possible to surpress too high activity and sharp loss of activity as seen in the initial stage of polymerization and maintain a moderate and suitable degree of polymerization activity.

Specific examples of the Lewis base compound (g) used in the present invention includes:
esters such as methyl formate, ethyl formate, propyl formate, butyl formate, isobutyl formate, pentyl formate, methyl acetate, ethyl acetate, propyl acetate isopropyl acetate, butyl acetate, isobutyl acetate, pentyl acetate, isopentyl acetate, hexyl acetate, cyclohexyl acetate, benzyl acetate, 3-methoxybutyl acetate, 2-ethylbutyl acetate, 3-ethylhexyl acetate, 3-methoxybutyl acetate, methyl propionate, ethyl propionate, butyl propionate, isopentyl propionate, methyl butyrate, ethyl butyrate, butyl butyrate, isopentyl butyrate, isobutyl isobutyrate, ethyl isovalerate, isobutyl isovalerate, butyl stearate, pentyl stearate, methyl benzoate, ethyl benzoate, propyl benzoate, butyl benzoate, isopentyl benzoate, benzyl benzoate, ethyl cinnamate, diethyl oxalate, dibutyl oxalate, dipentyl oxalate, diethyl malonate, dimethyl maleate, diethyl maleate, dibutyl maleate, dimethyl phthalate, diethyl phthalate, dibutyl phthalate, diisobutyl phthalate, and triacetin;
amines such as methylamine, dimethylamine, trimethylamine, ethylamine, diethylamine, triethylamine, propylamine, diisopropylamine, butylamine, isobutylamine, dibutylamine, tributylamine, pentylamine, dipentylamine, tripentylamine, 2-ethylhexylamine, allylamine, aniline, N-methylaniline, N,N-dimethylaniline, N,N-diethylaniline**,** toluidine, cyclohexylamine, dicyclohexylamine, pyrrole**,** piperidine, pyridine, picoline 2,4-lutidine, 2,6-lutidine, 2,6-di(t-butyl)pyridine, quinoline, and isoquinoline;
ethers such as diethyl ether, dipropyl ether, diisopropyl ether, dibutyl ether, dihexyl ether, anisole, phenetole, butyl phenyl ether, methoxytoluene, benzyl ethyl ether, diphenyl ether, dibenzyl ether, veratrole, 1,2-epoxypropane, dioxane, trioxane, furan, 2,5-dimethylfuran, tetrahydrofuran, tetrahydropyran, 1,2-diethoxyethane, 1,2-dibutoxyethane, and crown ethers;
ketones such as acetone, methyl ethyl ketone, methyl propyl ketone, diethyl ketone, butyl methyl ketone, methyl isobutyl ketone, methyl pentyl ketone, dipropyl ketone, diisobutyl ketone, cyclohexanone, methylcyclohexanone, and acetophenone;
thioethers such as dimethyl sulfide, diethyl sulfide, thiophene, and tetrahydrothiophene;
silyl ethers such as tetramethoxysilane, tetraethoxylilane, tetra(n-propoxy)silane, tetra(isopropoxy)silane, tetra(n-butoxy)silane, tetra(isopentoxy)silane, tetra(n-hexoxy)-silane, tetraphenoxysilane, tetrakis(2-ethylhexoxy)silane, tetrakis(2-ethylbutoxy)silane, tetrakis (2-methoxyethoxy)silane, methyltrimethoxysilane, ethyltrimethoxysilane, n-propyltrimethoxysilane, isopropyltrimethoxysilane, n-butyltrimethoxysilane, isobutyltrimethoxysilane, s-butyltrimethoxysilane, t-butyltrimethoxysilane, phenyltrimethoxysilane, vinyltrimethoxysilane, norbornyltrimethoxysilane, cyclohexyltrimethoxysilane, chloromethyltrimethoxysilane, 3-chloropropyltrimethoxysilane, 4-chlorotrimethoxysilane, triethoxysilane, methyltriethoxysilane, ethyltriethoxysilane, n-propyltriethoxysilane, n-butyltriethoxysilane, phenyltriethoxysilane, vinyltriethoxysilane, 3-aminopropyltriethoxysilane, ethyltri(isopropoxy)silane, isopentyltri(n-butoxy)silane, methyltri(n-hexoxy)silane, methyldimethoxysilane, dimethyldimethoxysilane, n-propylmethyldimethoxysilane, n-propylethyldimethoxysilane, di(n-propyl)dimethoxysilane, isopropylmethyldimethoxysilane, di(isopropyl)dimethoxysilane, n-propylisopropyldimethoxysilane, n-butylmethyldimethoxysilane, n-butylethyldimethoxy-silane, n-butyl-n-propyldimethoxysilane, n-butylisopropyl-dimethoxysilane, di(n-butyl)dimethoxysilane, isobutylmethyldimethoxysilane, di(isobutyl)dimethoxysilane, s-butylethyldimethoxysilane, di-s-butyldimethoxysilane, t-butylmethyldimethoxysilane, t-butyl-n-propyldimethoxysilane, di-t-butyldimethoxysilane, t-butyl-n-hexyldimethoxysilane, diisoamyldimethoxysilane, n-hexyl-n-propyldimethoxysilane, n-decylmethyldimethoxysilane, norbornylmethyldimethoxy-silane, cyclohexylmethyldimethoxysilane, methylphenyldimethoxysilane, diphenyldimethoxysilane**,** dicyclopentyldimethoxysilane, dimethyldiethoxysilane, diethyldiethoxysilane, diisopropyldiethoxysilane, s-butylmethyldiethoxysilane, t-butylmethyldiethoxysilane, dimethyldi(n-butoxy)silane, trimethylmethoxysilane, trimethylethoxysilane, trimethylisopropoxysilane, trimethyl-n-propoxysilane, trimethyl-t-butoxysilane, trimethylisobutoxysilane, trimethyl-n-butoxysilane, trimethyl-n-pentoxysilane, and trimethylphenoxysilane;
phosphines such as methylphosphine, ethylphosphine, phenylphosphine, benzylphosphine, dimethylphosphine, diethylphosphine, diphenylphosphine, methylphenylphosphine, trimethylphosphine, triethylphosphine, triphenylphosphine, tri-n-butylphosphine, ethylbenzylphenylphosphine, ethylbenzylbutylphosphine, trimethoxyphosphine, and diethylethoxyphosphine;
phosphine oxides such as triphenylphosphine oxide, dimethylethoxyphosphine oxide, and triethoxyphosphine oxide; nitriles such as acrylonitrile, cyclohexane dinitrile, and benzonitrile;
nitro compounds such as nitrobenzene, nitrotoluene, and dinitrobenzene;
acetals such as acetonedimethylacetal, acetophenonedimethylacetal, benzophenonedimethylacetal, and cyclohexanonedimethylacetal;
carbonate esters such as diethyl carbonate, diphenyl carbonate, and ethylene carbonate;
thioacetals such as 1-ethoxy-1-(methylthio)cyclopentane;
thioketones such as cyclohexanethioketone, but is not limited thereto.

When a Lewis compound is added in preparation of the catalyst, the molar ratio of the metallocene compound (d) to the Lewis compound is preferably in the range of from 1 : 0.01 to 1 : 1000, more preferably from 1 : 0.1 to 1 : 100.

In the preparation of the catalyst, the order of addition of the organoaluminum compound (e), the ionizing ionic compound (f), and the Lewis base compound (g) is not specially limited. Preferably, however, the organoaluminum compound (e) and the ionizing ionic compound (f) are firstly brought into contact (to cause reaction) with the prepolymerized catalyst, and then the Lewis base compound (g) is added thereto. More preferably it is desirable to cause the contact with the Lewis base compound (g) within the polymerization system.

The olefin applicable to the polymerization of the present invention includes α-olefins such as ethylene, propylene, 1-butene, 4-methyl-1-pentene, and 1-hexene; conjugated and unconjugated dienes such as butadiene, and 1,4-hexadiene; and styrene and cyclic dienes such as cyclobutene. The olefin may be a mixture of two or more of the above olefins.

The olefin polymerization in the present invention may be conducted either in a liquid phase or a gas phase. In the polymerization in a liquid phase, the solvent may be any organic solvent used generally in liquid-phase polymerization, including specifically benzene, toluene, xylene, pentane, hexane, and methylene chloride, and also the olefin itself.

The polymerization temperature is normally in the range of from -100 to 300°C, but is not limited thereto.

The present invention is described below in more detail by reference to Examples without limiting the invention thereto in any way.

The procedures of polymerization, reaction, and solvent purification were conducted in an inert atmosphere. The solvent used in the reaction was purified, dried, and/or deoxidized preliminarily in a conventional method. The compounds used in the reactions were synthesized and identified in conventional methods. The melt index (MI) in Examples were measured according to ASTM D-1238 (Condition E).

### Example 1

### ( Preparation of Prepolymerized Catalyst )

In 500 ml-glass flask, 1.29 g of silica (calcined at 700°C for 5 hours; surface area: 126 m²/g, pore diameter: 282 angstrom (1 angstrom = 0.1 nm), pore volume: 1.13 cc/g (as measured by the BET method (general method ) in a nitrogen atmosphere) was suspended in 30 ml of toluene. Thereto, 5.04 ml of methylaluminoxane solution in toluene (3.12 mol/l) was added, and the mixture was stirred at room temperature for one hour. Then, 108 ml of ethylenebis(indenyl)zirconiun dichloride solution in toluene (0.0019 mol/l) was added thereto, and the mixture was stirred at room temperature for 30 minutes. Thereto 85 ml of decane was added, and ethylene was fed at ordinary pressure at 250 N liter/min to conduct prepolymerization at 30°C for 7 hours. After the prepolymerization, the solvent was removed with a filter eg a bridge or stick filter, and the solid matter was washed with five 200 ml-portions of hexane. Consequently, a prepolymerized catalyst was obtained which contained 0.097 mmol of zirconium, 7.04 mmol of aluminum, and 16.3 g of polyethylene per gram of the silica.

### ( Polymerization )

In a 2-liter stainless steel autoclave equipped with a magnetic stirrer which had been thoroughly purged with nitrogen, were placed 500 ml of toluene and 0.3 mmol of triisobutylaluminum, and the mixture was stirred for 10 minutes. Thereto, the above prepolymerized catalyst in an amount of 0.25 µmol in terms of zirconium and 1.25 µmol of N,N-dimethylanilinium tetrakis(pentafluorophenyl)borate were added, and the mixture was stirred further 10 minutes. The temperature was raised to 70°C and gaseous ethylene was introduced to keep the internal pressure of the autoclave at 4 kg/cm²G (1 kg cm² = 0.981 bar) to cause polymerization. The temperature of the polymerization system rose rapidly up to 80°C. The polymerization was allowed to proceed at 80°C for 30 minutes by feeding ethylene continuously to keep the internal pressure of the autoclave at 4 kg/cm²G. As the result, a polymer was obtained at a yield of 75 g.

### Example 2

### ( Polymerization )

In a 2-liter stainless steel autoclave equipped with a magnetic stirrer which had been thoroughly purged with nitrogen, was placed 200 g of sodium chloride having been dried at 200°C for 20 hours as the dispersing medium. The internal temperature was adjusted to 75°C. Thereto, a mixture of the prepolymerized catalyst prepared in Example 1 in an amount of 2.5 µmol in terms of zirconium, 1.5 mmol of triisobutylaluminum, and 12.5 µmol of N,N-dimethylanilinium tetrakis(pentafluorophenyl)borate was introduced. Immediately, gaseous ethylene was fed continuously to keep the internal pressure of the autoclave at 8 kg/cm²G. The polymerization was allowed to proceed at 80°C for 30 minutes. After the polymerization, the autoclave was cooled, unreacted gas was purged, and the mixture of the formed polymer and the sodium chloride was taken out. The mixture was washed with pure water to dissolve out the sodium chloride, and the remaining solid matter was dried to obtain a polymer in a yield of 33 g.

### Comparative Example 1

### ( Polymerization )

In a 2-liter stainless steel autoclave equipped with a magnetic stirrer which had been thoroughly purged with nitrogen, was placed 200 g of sodium chloride having been dried at 200°C for 20 hours as the dispersing medium. The internal temperature was adjusted to 75°C. Thereto, a mixture of the prepolymerized catalyst prepared in Example 1 in an amount of 2.5 µmol in terms of zirconium and 1.5 mmol of triisobutylaluminum was introduced. Immediately, gaseous ethylene was fed continuously to keep the internal pressure of the autoclave at 8 kg/cm²G. The polymerization was allowed to proceed at 80°C for 30 minutes. After the polymerization, the autoclave was cooled, unreacted gas was purged, and the mixture of a formed polymer and the sodium chloride was taken out. The mixture was washed with pure water to dissolve out the sodium chloride, and the remaining solid matter was dried to obtain a polymer in a yield of 6 g.

### Example 3

### ( Preparation of Prepolymeric Catalyst )

A prepolymeric catalyst was prepared in the same manner as in Example 1 except that 1.32 g of the silica, 7.1 ml of the methylaluminoxane solution in toluene, and 113 ml of the ethylenebis(indenyl)zirconium dichloride solution in toluene were used, and prepolymerization was conducted for 4 hours. The resulting prepolymerized catalyst contained 0.080 mmol of zirconium, 3.61 mmol of aluminum, and 6.3 g of polyethylene per gram of the silica.

### ( Polymerization )

Polymerization was conducted in the same manner as in example 1 except that the above prepolymerized catalyst was used. Thereby a polymer was obtained in a yield of 68 g.

### Comparative Example 2

### ( Polymerization )

In a 2-liter stainless steel autoclave equipped with a magnetic stirrer which had been thoroughly purged with nitrogen, were placed 500 ml of toluene and 1.2 mmol of triisobutylaluminum, and the mixture was stirred for 10 minutes. Thereto, the prepolymerized catalyst prepared in Example 3 was added in an amount of 1.0 µmol in terms of zirconium, and the mixture was stirred further 10 minutes. The temperature was raised to 70°C and gaseous ethylene was introduced to keep the internal pressure of the autoclave at 4 kg/cm²G to cause polymerization. The temperature of the polymerization system rose rapidly up to 80°C. The polymerization was allowed to proceed at 80°C for 30 minutes by feeding ethylene continuously to keep the internal pressure of the autoclave at 4 kg/cm²G. As the result, a polymer was obtained in a yield of 6 g.

### Example 4

### ( Polymerization )

Polymerization was conducted in the same manner as in Example 2 except that the prepolymerized catalyst (1.0 mol in terms of zirconium) was used. Consequently a polymer was obtained in a yield of 24 g.

### Example 5

### ( Polymerization )

Polymerization was conducted in the same manner as in Example 2 except that the prepolymerized catalyst prepared in Example 3 was used in an amount of 2.5 µmol in terms of zirconium, and 12.5 µmol of tropylium tetrakis(pentafluoro-phenyl)borate was used in place of N,N-dimethylanilinium tetrakis(pentafluorophenyl)borate. Consequently a polymer was obtained in a yield of 51 g.

### Example 6

### ( Preparation of Prepolymerized Catalyst )

A prepolymerized catalyst was prepared in the same manner as in Example 1 except that 0.95 g of silica, 5.4 ml of the methylaluminoxane solution in toluene, and 70 ml of bis(n-butylcyclopentadineyl)zirconium dichloride solution (0.00228 mol/l) in toluene were used, and prepolymerization was conducted for 3 hours. The resulting prepolymerized catalyst contained 0.152 mmol of zirconium, 16.79 mmol of aluminum, and 41.9 g of polyethylene per gram of the silica.

### ( Polymerization )

Polymerization was conducted in the same manner as in Example 2 except that the above prepolymerized catalyst was used. Consequently a polymer was obtained in a yield of 40 g, which had an MI of 0.436 g/10min and a bulk density of 0.36 g/cm³.

### Example 7

### ( Preparation of Prepolymerized Catalyst )

A prepolymerized catalyst was prepared in the same manner as in Example 1 except that 0.9 g of the silica, 5.1 ml of the methylaluminoxane solution in toluene, and 70 ml of bis(indenyl)zirconium dichloride solution (0.00216 mol/l) in toluene were used, and prepolymerization was conducted for 3 hours. The resulting prepolymerized catalyst contained 0.095 mmol of zirconium, 9.01 mmol of aluminum and 9.7 g of polyethylene per gram of the silica.

### ( Polymerization )

Polymerization was conducted in the same manner as in Example 2 except that the above prepolymerized catalyst was used. Consequently a polymer was obtained in a yield of 54 g, which had an MI of 0,751 g/10min and a bulk density of 0,34 g/cm³.

### Comparative Example 3

### ( Polymerization )

Polymerization was conducted in the same manner as in Comparative Example 1 except that the prepolymerized catalyst obtained in Example 7 was used. Consequently 18 g of a polymer was produced which had an MI of 0.064g/10min and a bulk density of 0.31 g/cm³.

### Example 8

### ( Polymerization )

In a 2-liter stainless steel autoclave equipped with a magnetic stirrer which had been thoroughly purged with nitrogen, was placed 200 g of sodium chloride having been dried at 200°C for 20 hours as the dispersing medium. The internal temperature was adjusted to 75°C. Thereto, a mixture of the prepolymeric catalyst prepared in Example 7 in an amount of 2.5 µmol in terms of zirconium, 1.5 mmol of triisobutylaluminum, and 5 µmol of N,N-dimethylanilinium tetrakis(pentafluorophenyl)borate was introduced. Immediately, gaseous ethylene was fed continuously to keep the internal pressure of the autoclave at 8 kg/cm²G. Polymerization was allowed to proceed at 80°C for 30 minutes. After the polymerisation, the autoclave was cooled, unreacted gas was purged, and the mixture of the formed polymer and the sodium chloride was taken out. The mixture was washed with pure water to dissolve out the sodium chloride, and the remaining solid matter was dried to obtain a polymer in a yield of 76 g, which had an MI of 0.819 g/10min and a bulk density of 0.34 g/cm³.

### Example 9

### ( Preparation of Prepolymerized Catalyst )

A prepolymerized catalyst was prepared in the same manner as in Example 1 except that 0.57 g of the silica, 3.2 ml of the methylaluminoxane solution in toluene, and 40 ml of dimethylsilanediylbis(indenyl)zirconium dichloride solution in toluene (0.00239 mol/l) were used, and prepolymerization was conducted for 3 hours. The resulting prepolymerized catalyst contained 0.089 mmol of zirconium, 9.04 mmol of aluminum, and 18.2 g of polyethylene per gram of the silica.

### ( Polymerization )

Polymerization was conducted in the same manner as in Example 2 except that 2.5 µmol (in terms of zirconium) of the prepolymerized catalyst prepared above was used, and 12.5 µmol of tropylium tetrakis(pentafluorophenyl)borate was used in place of N,N-dimethylanilinium tetrakis(pentafluoro-phenyl)borate. Consequently, a polymer was obtained in a yield of 41 g.

### Example 10

### ( Preparation of Prepolymerized Catalyst )

In 500 ml-glass flask, 0.90 g of silica (calcined at 700°C for 5 hours; surface area: 295 m²/g, pore diameter: 197 angstrom, pore volume: 1.58 cc/g (as measured by the BET method (general method ) in a nitrogen atmosphere) was suspended in 15 ml of decane. Thereto, 5.2 ml of triisobutylaluminum solution in toluene (0.87 mol/l) was added, and the mixture was stirred at room temperature for one hour. Then 2.8 ml of methylaluminoxane solution in toluene (2.98 mol/l) was added thereto, and the mixture was stirred at room temperature for one hour. Further thereto, 70 ml of bis(cyclopentadienyl)-zirconium dichloride solution in toluene (0.00216 mol/l) was added, and the mixture was stirred at room temperature for one hour. Thereto 35 ml of decane was added, and ethylene was introduced at ordinary pressure at 250 N liter/min. The mixture was stirred under ethylene gas atmosphere at 30°C for 3 hours to conduct prepolymerization. After the prepolymerization, the solvent was removed with a bridge filter, and the solid matter was washed with five 200 ml-portions of hexane. Consequently, a prepolymerized catalyst was obtained which contained 0.090 mmol of zirconium, 5.07 mmol of aluminum, and 11.7 g of polyethylene per gram of the silica.

### ( Polymerization )

In a 2-liter stainless steel autoclave equipped with a magnetic stirrer with had been thoroughly purged with nitrogen, was placed 150 g of sodium chloride having been dried at 200°C for 20 hours as the dispersing medium. The internal temperatures was adjusted to 75°C. Thereto, a mixture of the prepolymerized catalyst prepared as above in Example 10 in amount of 2.5 µmol in terms of zirconium, 1.5 mmol of triisobutylaluminum, and 12.5 µmol of N,N-dimethylanilinium tetrakis(pentafluorophenyl)borate was introduced. Immediately, gaseous ethylene was fed continuously to keep the internal pressure of the autoclave at 8 kg/cm²G. The polymerization was allowed to proceed at 80°C for 30 minutes. After the polymerization, the autoclave was cooled, unreacted gas was purged, and the mixture of the formed polymer and the sodium chloride was taken out. The mixture was washed with pure water to dissolve off the sodium chloride, and the remaining solid matter was dried to obtain 37 g of polyethylene having a bulk density of 0.36 g/cm³.

### Comparative Example 4

### ( Polymerization )

In a 2-liter stainless steel autoclave equipped with a magnetic stirrer which had been thoroughly purged with nitrogen, was placed 150 g of sodium chloride having been dried at 200°C for 20 hours as the dispersing medium. The internal temperature was adjusted to 75°C. Thereto, a mixture of the prepolymerized catalyst prepared in Example 10 in an amount of 2.5 µmol in terms of zirconium and 1.5 mmol of triisobutylaluminum was introduced. Immediately, gaseous ethylene was fed continuously to keep the internal pressure of the autoclave at 8 kg/cm²G. The polymerization was allowed to proceed at 80°C for 30 minutes. After the polymerization, the autoclave was cooled, unreacted gas was purged, and the mixture of the formed polymer and the sodium chloride was taken out. The mixture was washed with pure water to dissolve off the sodium chloride, and the remaining solid matter was dried to obtain a polymer in a yield of as low as 1.3 g.

### Example 11

### ( Preparation of Prepolymerized Catalyst )

In 500 ml-glass flask, 0.96 g of silica (calcined at 700°C for 5 hours; surface area: 295 m²/g, pore diameter: 197 angstrom, pore volume: 1.58 cc/g (as measured by the BET method (general method ) in a nitrogen atmosphere) was suspended in 15 ml of decane. Thereto, 4.8 ml of triisobutylaluminum solution in toluene (0.87 mol/l) was added and the mixture was stirred at room temperature for one hour. Then 1.1 ml of methylaluminoxane solution in toluene (2.98 mol/l) was added thereto, and the mixture was stirred at room temperature for one hour. Further thereto, 70 ml of bis(cyclopentadienyl)zirconium dichloride solution in toluene (0.00216 mol/l) was added, and the mixture was stirred at room temperature for one hour. Thereto 35 ml of decane was added, and ethylene was introduced at ordinary pressure at 250 N liter/min. The mixture was stirred under ethylene gas atmosphere at 30°C for 3 hours to allow prepolymerization to proceed. After the prepolymerization, the solvent was removed with a bridge filter, and the solid matter was washed with five 200 ml-portions of hexane. Consequently, a prepolymerized catalyst was obtained which contained 0.11 mmol of zirconium, 4.79 mmol of aluminum, and 7.6 g of polyethylene per gram of the silica.

### ( Polymerization )

Polymerization was conducted in the same manner as in Example 10 except that the prepolymerized catalyst was the one obtained above. Consequently, 26.4 g of polyethylene was produced which had a bulk density of 0.35 g/cm³.

### Example 12

### ( Preparation of Prepolymerized Catalyst )

In 500 ml-glass flask, 1.30 g of silica (calcined at 700°C for 5 hours; having a surface area of 126 m^{2/}g, a pore diameter of 282 angstrom, and a pore volume of 1.13 cc/g (as measured by the BET method (general method ) in a nitrogen atmosphere) was suspended in 20 ml of decane.

Thereto, 4.93 ml of methylaluminoxane solution in toluene (3.12 mol/l) was added and the mixture was stirred at room temperature for one hour. Thereto, 108 ml of ethylenebis(indenyl)zirconium dichloride solution in toluene (0.0019 mol/l) was added, and the mixture was stirred at room temperature for 30 minutes. Then 85 ml of decane was added, and ethylene was introduced at ordinary pressure at 250 N liter/min. Prepolymerization was allowed to proceeds at 30°C for 3 hours. After the prepolymerization, the solvent was removed by a bridge filter, and the solid matter was washed with five 200 ml-portions of hexane. Consequently, a prepolymerized catalyst was obtained which contained 0.16 mmol of zirconium, 16.4 mmol of aluminum, and 33.2 g of polyethylene per gram of the silica.

### ( Polymerization )

In a 2-liter stainless steel autoclave equipped with a magnetic stirrer which had been thoroughly purged with nitrogen, was placed 150 g of sodium chloride having been dried at 200°C for 20 hours as the dispersing medium. The internal temperature was adjusted to 75°C. Thereto, a mixture of the prepolymerized catalyst prepared above in an amount of 2.5 µmol in terms of zirconium, 1.5 mmol of triisobutylaluminum, and 12.5 µmol of N,N-dimethylanilinium tetrakis(pentafluorophenyl)borate was introduced. Further thereto, 25 µmol of diphenyldimethoxysilane was introduced as the Lewis base compound. Immediately, gaseous ethylene was fed continuously to keep the internal pressure of the autoclave at 8 kg/cm²G. Polymerization was allowed to proceed at 80°C for 30 minutes. After the polymerization, the autoclave was cooled, unreacted gas was purged, and the mixture of the formed polymer and the sodium chloride was taken out. The mixture was washed with pure water to dissolve out the sodium chloride, and the remaining solid matter was dried to obtain a polymer in a yield of 59 g.

### Comparative Example 5

### ( Polymerization )

In a 2-liter stainless steel autoclave equipped with a magnetic stirrer which had been thoroughly purged with nitrogen, was placed 150 g of sodium chloride having been dried at 200°C for 20 hours as the dispersing medium. The internal temperature was adjusted to 75°C. Thereto, a mixture of the prepolymerized catalyst prepared in Example 12 in an amount of 2.5 µmol in terms of zirconium and 1.5 mmol of triisobutylaluminum was introduced. Immediately, gaseous ethylene was fed continuously to keep the internal pressure of the autoclave at 8 kg/cm²G. Polymerization was allowed to proceed, at 80°C for 30 minutes. After the polymerization, the autoclave was cooled, unreacted gas was purged, and the mixture of the formed polymer and the sodium chloride was taken out. The mixture was washed with pure water to dissolve out the sodium chloride, and the remaining solid matter was dried to obtain 11 g of a polymer.

### Example 13

### ( Polymerization )

Polymerization was conducted in the same manner as in Example 12 except that diphenylmethoxysilane was not added. P polymer was obtained in a yield of 29 g.

### Example 14

### ( Preparation of Prepolymerized Catalyst )

In a 300 ml-Schlenck flask, was placed 100 ml of purified toluene, and 5 g of silica which was the same as the one used in Example 1. Thereto 20.8 ml of triisobutylaluminum solution in toluene (0.83 mmol/ml) was added. The mixture was stirred at room temperature for one hour. Then it was heated to 50°C and stirred for one hour. The resulting solid matter was collected and washed with toluene, and was dried under reduced pressure to obtain a flowable powdery matter. 1.29 g of the obtained carrier was suspended in 20 ml of decane in a 500 ml-glass flask. Thereto, 3.37 ml of methylaluminoxane solution in toluene (3.12 mol/l) was added, and the mixture was stirred at room temperature for one hour. Then 110 ml of ethylenebis(indenyl)zirconium dichloride solution in toluene (0.0019 mol/l) was further added thereto and the mixture was stirred at room temperature for 30 minutes. Thereto 85 ml of decane was added, and ethylene was introduced at ordinary pressure at 250 N liter/min. Prepolymerization was allowed to proceed at 30°C for 3 hours. After the prepolymerization, the solvent was removed, with a bridge filter, and the solid matter was washed with five 200 ml-portions of hexane. Consequently, a prepolymerized catalyst was obtained which contained 0.13 mmol of zirconium, 6.8 mmol of aluminum, and 20.9 g of polyethylene per gram of silica.

### ( Polymerization )

In a 2-liter stainless steel autoclave equipped with a magnetic stirrer which had been thoroughly purged with nitrogen, was placed 150 g of sodium chloride having been dried at 200°C for 20 hours as the dispersing medium. The internal temperature was adjusted to 75°C. Thereto, a mixture of the prepolymerized catalyst prepared above in an amount of 2.5 µmol in terms of zirconium, 1.5 mmol of triisobutylaluminum, and 12.5 µmol of N,N-dimethylanilinium tetrakis(pentafluorophenyl)borate was introduced, and further 5 µmol of diisobutyl phthalate was introduced as a Lewis base compound. Immediately, gaseous ethylene was fed continuously to keep the internal pressure of the autoclave at 8 kg/cm²G. Polymerization was allowed to proceed at 80°C for 30 minutes. After the polymerization, the autoclave was cooled, unreacted gas was purged, and the mixture of the formed polymer and the sodium chloride was taken out. The mixture was washed with pure water to dissolve out the sodium chloride, and the remaining solid matter was dried to obtain a polymer in a yield of 46 g.

### Comparative Example 6

### ( Polymerization )

In a 2-liter stainless steel autoclave equipped with a magnetic stirrer which had been thoroughly purged with nitrogen, was placed 150 g of sodium chloride having been dried at 200°C for 20 hours as the dispersing medium. The internal temperature was adjusted to 75°C. Thereto, a mixture of the prepolymerized catalyst prepared in Example 14 in an amount of 2.5 µmol in terms of zirconium, and 1.5 mmol of triisobutylaluminum, was introduced. Immediately, gaseous ethylene was fed continuously to keep the internal pressure of the autoclave at 8 kg/cm²G. Polymerization was allowed to proceed at 80°C for 30 minutes. After the polymerization, the autoclave was cooled, unreacted gas was purged, and the mixture of the formed polymer and the sodium chloride was taken out. The mixture was washed with pure water to dissolve out the sodium chloride, and the remaining solid matter was dried to obtain a polymer in a yield of 3.6 g.

### Example 15

### ( Polymerization )

Polymerization was conducted in the same manner as in Example 14 except that diisobutyl phthalate was not used. As the results, a polymer was obtained in a yield of 39 g.

### Example 16

### ( Preparation of Prepolymerized Catalyst )

In 500 ml-glass flask, 1.02 g of silica used in Example 10 was suspended in 15 ml of decane. Thereto, 5.8 ml of methylaluminoxane solution in toluene (2.98 mol/l was added and the mixture was stirred at room temperature for one hour. Further thereto, 70 ml of bis(indenyl)zirconium dichloride solution in toluene (0.0024 mol/l) was added, and the mixture was stirred at room temperature for 30 minutes. Thereto 35 ml of decane was added, and ethylene was introduced at ordinary pressure at 250 N liter/min. The mixture was stirred in ethylene gas atmosphere at 30°C for 3 hours to allow prepolymerization to proceed. After the prepolymerization, the solvent was removed with a bridge filter, and the solid matter was washed with five 200 ml-portions of hexane. Consequently, a prepolymerized catalyst was obtained which contained 0.112 mmol of zirconium, 10.61 mmol of aluminum, and 23.2 g of polyethylene per gram of the silica.

### ( Polymerization )

Polymerization was conducted in the same manner as in Example 8 except that the prepolymerized catalyst was the one obtained above. Consequently, 75 g of polyethylene was produced which had an MI of 0.767 g/10min, and a bulk density of 0.40 g/cm³.

### Example 17

### ( Preparation of Prepolymerized Catalyst )

In a 300 ml-Schlenck flask, was placed 100 ml of purified toluene, and 10.5 g of silica (calcined at 200°C for 5 hours, having a surface area of 126 m²/g, a pore diameter of 282 angstrom, and a pore volume of 1.13 cc/g (as measured by the BET method (general method ) in a nitrogen atmosphere ). The mixture was cooled to 0°C. Thereto, 60.3 ml of triisobutylaluminum solution in toluene (0.87 mmol/ml) was added dropwise over one hour. The mixture was stirred at 0°C for one hour, at room temperature for one hour, and heated and stirred at 50°C for one hour, The resulting solid matter was collected and washed with toluene, and was dried under reduced pressure to obtain a flowable powdery matter. 0.90 g of the obtained silica was suspended in 20 ml of decane in a 500 ml-glass flask. Thereto 5.2 ml of triisobutylaluminum solution in toluene (0.87 mol/l) was added and the mixture was stirred at room temperature for one hour, and at 50°C for one hour. The solvent was removed by a bridge filter, and the solid matter was washed three 100 ml-portions of toluene. 3.17 g of the resulting silica was suspended in 48 ml of decane in a one liter-glass flask. Thereto 17.9 ml of methylaluminoxane solution in toluene (2.98 mol/l) was added, and the mixture was stirred at room temperature for one hour. Then 222 ml of bis(cyclopentadienyl)zirconium dichloride solution in toluene (0.0024 mol/l) was added thereto, and stirred at room temperature for one hour. Thereto, 111 ml of decane was added and ethylene was introduced at an ordinary pressure at 250 N liter/min. The mixture was stirred at 30°C for 3 hours under ethylene atmosphere to allow prepolymerization to proceed. After the prepolymerization, the solvent was removed by a bridge filter, and the remaining solid matter was washed with four 500 ml-portions of hexane. Consequently, a prepolymerized catalyst was obtained which contained 0.109 mmol of zirconium, 11.35 mmol of aluminum, and 16.1 g of polyethylene per gram of silica.

### ( Polymerization )

Polymerization was conducted in the same manner as in Example 8 except that the prepolymerized catalyst was the one obtained above. Consequently, 101 g of polyethylene was produced which had an MI of 0.602 g/10min, and a bulk density of 0.37 g/cm³.

### Example 18

### ( Polymerization )

In a 2-liter stainless steel autoclave equipped with a magnetic stirrer which had been thoroughly purged with nitrogen, was placed 200 g of sodium chloride having been dried at 200°C for 20 hours as the disposing medium. The internal temperature was adjusted to 75°C. Thereto, was introduced a mixture of the prepolymerized catalyst prepared in Example 17 in an amount of 2.5 µmol in terms of zirconium, 1.5 mmol of triisobutylaluminum, and 5 µmol of N,N-dimethylanilinium tetrakis(pentafluorophenyl)borate. Immediately, gaseous mixture of ethylene and butene-1 containing 16.1 mol% of butene-1 was introduced to the autoclave, and ethylene gas only was fed continuously to keep the internal pressure of the autoclave at 8 kg/cm²G. Polymerization was allowed to proceed at 80°C for 30 minutes. After the polymerization, the autoclave was cooled, unreacted gas was purged, and the mixture of the formed polymer and the sodium chloride was taken out. The mixture was washed with pure water to dissolve out the sodium chloride, and the remaining solid matter was dried, thereby 72 g of a polymer being obtained which had an MI of 5.6 g/10min, a density 0.923 g/cm³, and a bulk density of 0.32 g/cm³**.**

### Comparative Example 7

### ( Preparation of Solid Catalyst )

In a 300 ml-Schlenck flask, 0.89 g of silica treated in the same manner as in Example 17 as was suspended in 50 ml of toluene. Thereto, 50 ml of bis(indenyl)zirconium dichloride solution in toluene (0.0029 mol/l) and 8.3 ml of triisobutylaluminum solution in toluene (0.87 mol/l) were added, and the mixture was stirred at room temperature for 2 hours. Then 100 ml of N,N-dimethylanilinium tetrakis(pentafluorophenyl)borate in toluene (0.0029 mol/l) was added, and the mixture was stirred at room temperature for 2 hours. The solvent was removed by a bridge filter, and the separated solid matter was washed with four 100 ml portions of hexane. Thereby a solid catalyst was obtained which contained 0.101 mmol of zirconium, 1.32 mmol of aluminum, and 0.148 mmol of boron per gram of silica.

### ( Polymerization )

Polymerization was conducted in the same manner as in Comparative Example 1 except that the above solid catalyst was used and the polymerization time was one hour. Consequently, 15.9 g of a polymer was obtained which had a bulk density of 0.33 g/cm³.

### Comparative Example 8

### ( Preparation of Solid Catalyst )

In a 300 ml-Schlenck flask, 1.33 g of silica treated in the same manner as in Example 17 was suspended in 50 ml of toluene. Thereto, 50 ml of bis(indenyl)dimethylzirconium solution in toluene (0.0045 mol/l) and 100 ml of N,N-dimethylanilinium tetrakis(pentafluorophenyl)borate in toluene (0.0022 mol/l) was added, and the mixture was stirred at room temperature for 3 hours. The solvent was removed by a bridge filter, and the separated solid matter was washed with four 100 ml portions of hexane. Thereby a solid catalyst was obtained which contained 0.102 mmol of zirconium, and 0.157 mmol of boron per gram of silica.

### ( Polymerization )

Polymerization was conducted in the same manner as in Comparative Example 1 except that the above solid catalyst was used. Consequently, a polymer was obtained in a yield of 7.5 g, which had a bulk density of 0.28 g/cm³.

### Comparative Example 9

### ( Preparation of Prepolymerized Catalyst )

The solid catalyst obtained in Comparative Example 7 was suspended in 100 ml of hexane, and triisobutylaluminum was added thereto. Ethylene was introduced at an ordinary pressure at 250 N liter/min thereto, and the suspension was stirred in an ethylene atmosphere at 30°C for 3 hours to conduct prepolymerization. Thereafter, the solvent was removed by a bridge filter, and the separated solid matter was washed with five 200 ml-portions of hexane. Consequently, a prepolymerized catalyst was obtained which contained 0:093 mmol of zirconium, 1.22 mmol of aluminum, 0.14 mmol of boron, and 7.3 g of polyethylene.

### ( Polymerization )

Polymerization was conducted in the same manner as in Comparative Example 1 except that the above prepolymerized catalyst was used. Consequently, a polymer was obtained in a yield of 7.5 g, which had a bulk density of 0.33 g/cm³.

### Comparative Example 10

### ( Preparation of Solid Catalyst )

In 500 ml-glass flask, 1.21 g of silica was suspended in 18 ml of toluene. Thereto, 6.8 ml of methylaluminoxane solution in toluene (2.98 mol/l) was added and the mixture was stirred at room temperature for one hour. Further thereto, 70 ml of bis(indenyl)zirconium dichloride solution in toluene (0.0029 mol/l) was added, and the mixture was stirred at room temperature for 3 hours. The solvent was removed with a bridge filter, and the solid matter was washed with four 100 ml-portions of hexane. Consequently, a solid catalyst was obtained which contained 0.011 mmol of zirconium, and 2.25 mmol of aluminum per gram of the silica.

### ( Polymerization )

Polymerization was conducted in the same manner as in Example 2 except that the solid catalyst obtained above was used as the catalyst. Consequently, a polymer having a bulk density of 0.29 g/cm³ was obtained in a yield of 7.0 g.

### Comparative Example 11

### ( Preparation of Prepolymerized Catalyst )

In 500 ml-glass flask, 1.30 g of silica was suspended in 50 ml of toluene. Thereto 70 ml of bis(indenyl)dimethylzirconium solution in toluene (0.0031 mol/l), and 100 ml of N,N-dimethylanilium tetrakis(pentafluorophenyl)borate solution (0.0034 mol/l) were added, and the mixture was stirred at room temperature for 3 hours. The solvent was removed by a bridge filter, and the obtained solid matter was washed with four 100 ml-portions of hexane. The washed solid matter was suspended in 200 ml of hexane, and thereto, triisobutylaluminum was added and ethylene was introduced at ordinary pressure at 250 N liter/min. The suspension was stirred in an ethylene atmosphere at 30°C for 3 hours to conduct prepolymerization. After the prepolymerization, the solvent was removed by a bridge filter, and the obtained solid matter was washed with four 200 ml-portions of hexane. Thereby a prepolymerized catalyst was obtained which contained 0.09 mmol of zirconium, 0.145 mmol of boron, and 6.5 g of polyethylene per gram of silica.

### ( Polymerization )

Polymerization was conducted in the same manner as in Comparative Example 1 except that the prepolymerized catalyst obtained above was used. Consequently, a polymer having a bulk density of 0.31 g/cm³ was obtained in a yield of 5.5 g.

The present invention provides an olefin polymerization catalyst formed from a prepolymerized catalyst having been obtained by olefin prepolymerization, an organoaluminum compound, and an ionizing ionic compound, and optionally a Lewis base compound. This catalyst exhibits high catalyst activity in olefin polymerization with a smaller amount of an organoaluminumoxy compound. The process of the present invention gives a polymer having excellent particle properties, for example high bulk density.

## Claims

1. A catalyst system for polymerisation of olefins comprising (e) an organoaluminum compound, (f) an ionizing ionic compound, optionally (g) a Lewis based compound and an olefin prepolymerised catalyst which has been prepared by prepolymerising an olefin on a catalyst formed from (a) a carrier, optionally (b) an organoaluminum compound, (c) an organoaluminumoxy compound and (d) a metallocene compound.

2. A catalyst system as claimed in claim 1 characterised in that the organoaluminum compound (b) is used in the preparation of the olefin prepolymerised catalyst.

3. A catalyst system as claimed in claim 1 or claim 2 characterised in that there is present (g) the Lewis base compound.

4. A catalyst system as claimed in claim 1, 2 or 3 characterised in that the carrier has been treated with (c) an organoaluminumoxy compound and (d) a metallocene compound and optionally (b) an organoaluminum compound.

5. A catalyst system as claimed in any one of claims 1 to 4 characterised in that in the prepolymerisation 0.01 to 100g of olefin is polymerised per gram of the catalyst components (a), (b), (c) and (d).

6. A catalyst system as claimed in any one of claims 1 to 5 characterised in that in the prepolymerisation the organoaluminum compound (b) is used in an amount of 0.05 to 50 mmol in terms cf the aluminum atom per gram of the carrier (a).

7. A catalyst system as claimed in any one of claims 1 to 6 characterised in that in the prepolymerisation the metallocene compound (d) is used in an amount of from 0.005 to 1 mmol in terms of the transition metal atom per gram of the carrier (a).

8. A catalyst system as claimed in any one of claims 1 to 7 characterised in that in the prepolymerisation the aluminumoxy compound is used in an amount of from 1 to 200 mol in terms of the aluminium atom per mol of the transition metal atom of the metallocene compound (d).

9. A process for preparing a catalyst system for polymerisation of olefins according to Claim 1 characterised in that (e) an organoaluminum compound, (f) an ionizing ionic compound, and optionally (g) a Lewis base compound are mixed with an olefin prepolymerised catalyst which has been prepared by prepolymerising an olefin on a catalyst formed from (a) a carrier which has been treated with (c) an organoaluminumoxy compound, optionally (b) an organoaluminum compound and (d) a metallocene compound.

10. A process as claimed in claim 9 characterised in that (g) the Lewis base compound is present.

11. A process for producing a polyolefin which comprises polymerising or copolymerising olefin in the presence of a catalyst system as claimed in any one of claims 1 to 8.

## Patentansprüche

1. Katalysatorsystem zur Polymerisation von Olefinen, umfassend (e) eine Organoaluminiumverbindung, (f) eine ionisierende ionische Verbindung, gegebenenfalls (g) eine Lewis-Basenverbindung und einen Olefin-vorpolymerisierten Katalysator, der durch Vorpolymerisation eines Olefins auf einem aus (a) einem Träger, gegebenenfalls (b) einer Organoaluminiumverbindung, (c) einer Organoaluminiumoxyverbindung und (d) einer Metallocenverbindung gebildeten Katalysator hergestellt wurde.

2. Katalysatorsystem nach Anspruch 1, dadurch gekennzeichnet, daß die Organoaluminiumverbindung (b) bei der Herstellung des Olefin-vorpolymerisierten Katalysators verwendet wird.

3. Katalysatorsystem nach Anspruch 1 oder 2, dadurch gekennzeichnet, daß (g) die Lewis-Basenverbindung vorhanden ist.

4. Katalysatorsystem nach Anspruch 1, 2 oder 3, dadurch gekennzeichnet, daß der Träger mit (c) einer Organoaluminiumoxyverbindung und (d) einer Metallocenverbindung und gegebenenfalls (b) einer Organoaluminiumverbindung behandelt wurde.

5. Katalysatorsystem nach einem der Ansprüche 1 bis 4, dadurch gekennzeichnet, daß bei der Vorpolymerisation 0,01 bis 100 g Olefin pro Gramm der Katalysatorbestandteile (a), (b), (c) und (d) polymerisiert wird.

6. Katalysatorsystem nach einem der Ansprüche 1 bis 5, dadurch gekennzeichnet, daß bei der Vorpolymerisation die Organoaluminiumverbindung (b) in einer Menge von 0,05 bis 50 mmol, in bezug auf das Aluminiumatom pro Gramm des Trägers (a) verwendet wird.

7. Katalysatorsystem nach einem der Ansprüche 1 bis 6, dadurch gekennzeichnet, daß bei der Vorpolymerisation die Metallocenverbindung (d) in einer Menge von 0,005 bis 1 mmol, in bezug auf das Übergangsmetallatom, pro Gramm des Trägers (a) verwendet wird.

8. Katalysatorsystem nach einem der Ansprüche 1 bis 7, dadurch gekennzeichnet, daß bei der Vorpolymerisation die Aluminiumoxyverbindung in einer Menge von 1 bis 200 mol, in bezug auf das Aluminiumatom, pro mol der Übergangsmetallatome der Metallocenverbindung (d) verwendet wird.

9. Verfahren zur Herstellung eines Katalysatorsystems zur Polymerisation von Olefinen nach Anspruch 1, dadurch gekennzeichnet, daß (e) eine Organoaluminiumverbindung, (f) eine ionisierende ionische Verbindung und gegebenenfalls (g) eine Lewis-Basenverbindung mit einem Olefin-vorpolymerisierten Katalysator gemischt werden, der durch Vorpolymerisation eines Olefins auf einem aus (a) einem Träger, der mit (c) einer Organoaluminiumoxyverbindung, gegebenenfalls (b) einer Organoaluminiumverbindung und (d) einer Metallocenverbindung behandelt wurde, gebildeten Katalysator hergestellt wurde.

10. Verfahren nach Anspruch 9, dadurch gekennzeichnet, daß (g) die Lewis-Basenverbindung vorhanden ist.

11. Verfahren zur Herstellung eines Polyolefins, umfassend die Polymerisation oder Copolymerisation eines Olefins in Gegenwart eines Katalysatorsystems nach einem der Ansprüche 1 bis 8.

## Revendications

1. Système de catalyseur pour la polymérisation des oléfines comprenant (e) un composé organoaluminium, (f) un composé ionique ionisant, éventuellement (g) un composé de type base de Lewis et un catalyseur prépolymérisé d'oléfine qui a été préparé en prépolymérisant une oléfine sur un catalyseur formé à partir de (a) un support, éventuellement (b) un composé organoaluminium, (c) un composé organoaluminiumoxy et (d) un composé métallocène.

2. Système de catalyseur selon la revendication 1, caractérisé en ce que le composé organoaluminium (b) est utilisé dans la préparation du catalyseur prépolymérisé d'oléfine.

3. Système de catalyseur selon la revendication 1 ou la revendication 2, caractérisé en ce que (g) le composé de type base de Lewis est présent.

4. Système de catalyseur selon la revendication 1, 2 ou 3, caractérisé en ce que le support a été traité avec (c) un composé organoaluminiumoxy et (d) un composé métallocène et éventuellement (b) un composé organoaluminium.

5. Système de catalyseur selon l'une quelconque des revendications 1 à 4, caractérisé en ce que, dans la prépolymérisation, 0,01 à 100 g d'oléfine sont polymérisés par gramme des constituants (a), (b), (c) et (d) du catalyseur.

6. Système de catalyseur selon l'une quelconque des revendications 1 à 5, caractérisé en ce que, dans la prépolymérisation, le composé organoaluminium (b) est utilisé dans une quantité de 0,05 à 50 mmoles calculée par rapport à l'atome d'aluminium par gramme du support (a).

7. Système de catalyseur selon l'une quelconque des revendications 1 à 6, caractérisé en ce que, dans la prépolymérisation, le composé métallocène (d) est utilisé dans une quantité de 0,005 à 1 mmole calculée par rapport à l'atome de métal de transition par gramme du support (a).

8. Système de catalyseur selon l'une quelconque des revendications 1 à 7, caractérisé en ce que, dans la prépolymérisation, le composé aluminiumoxy est utilisé dans une quantité de 1 à 200 moles calculée par rapport à l'atome d'aluminium par mole de l'atome de métal de transition du composé métallocène (d).

9. Procédé pour la préparation d'un système de catalyseur pour la polymérisation des oléfines selon la revendication 1, caractérisé en ce que (e) un composé organoaluminium, (f) un composé ionique ionisant, et éventuellement (g) un composé de type base de Lewis sont mélangés avec un catalyseur prépolymérisé d'oléfine qui a été préparé en prépolymérisant une oléfine sur un catalyseur formé à partir de (a) un support qui a été traité avec (c) un composé organoaluminiumoxy, éventuellement (b) un composé organoaluminium et (d) un composé métallocène.

10. Procédé selon la revendication 9, caractérisé en ce que (g) le composé de type base de Lewis est présent.

11. Procédé pour la préparation d'une polyoléfine qui comprend le fait de polymériser ou de copolymériser une oléfine en présence d'un système de catalyseur tel que revendiqué dans l'une quelconque des revendications 1 à 8.
